Europäisches Patentamt

European Patent Office

Office européen des brevets

(11) Publication number: **0 488 272 A1**

# EUROPEAN PATENT APPLICATION

(21) Application number: **91120366.9**

(51) Int. Cl.5: **B60L 11/18**

(22) Date of filing: **28.11.91**

(30) Priority: **30.11.90 IT 1255690**

(43) Date of publication of application:
**03.06.92 Bulletin 92/23**

(84) Designated Contracting States:
**AT BE CH DE DK ES FR GB GR LI LU NL SE**

(71) Applicant: **DIGITALIA S.R.L.**
**Via Corsica, 19/3**
**Genova(IT)**
Applicant: **TECHNIPLAST S.r.l.**

Via Roma, 8/A
Genova(IT)

(72) Inventor: **Zipoli, Claudio, Ing.**
**Via Molfino 6/40**
**Genova(IT)**

(74) Representative: **La Ciura, Salvatore**
**c/o STUDIO D'ORIO Via F. Sforza, 3**
**I-20122 Milan(IT)**

(54) **Method and device for electrical power supply, in particular for electrical feed vehicles.**

(57) Method for the supplying electrical energy, for electrical feed vehicles that includes a primary source (8), eg. a number of accumulators, electrically connected to at least one propulsion system (M1, M2) wherein:

The primary electrical energy source (8) is subdivided into a number of electrical energy sub-sources (108,208,308), electrically independent from each other and equipped with adaptors capable of transforming the voltage value of each sub-source into the right voltage for the motors; b) one or more of the electrical energy sub-sources (108, 208, 308) are connected to the propulsion system (M1, M2), or temporarily all of them, in order to obtain the necessary electric motor (M1, M2) power supply currents.

Fig.1

The invention concerns a method and device for supplying electric energy, especially for electric traction vehicles that are equipped with a primary source of electrical energy, such as several accumulators electrically connected to at least one electric propulsor.

Electric vehicles known in the art have rechargeable electrical energy accumulators that constitute the primary electrical energy source, and are all stably connected in series or in parallel, or partially in series and partially in parallel. In this way, the necessary voltages and currents for supplying the electric propulsor are made available. The energy from the primary source is always simultaneously drawn from all the accumulators, given that they are permanently connected to each other. Before being fed to the propulsors the energy is passed through a "chopper" for the fractioning.

The simultaneous connection of all the accumulators to provide a primary electrical energy source has the disadvantage of an electrical energy loss and an unsuitable utilization of the accumulators themselves. In effect, the continuous tapping of energy from all the accumulators causes them to beat up, thus compromising their duration in the long run, and provoking a non-homogeneity charge yield. After a certain working period, the accumulators cease to be discharged in a uniform manner. Furthermore, the accumulators that have run down more than others, or those which have been damaged, cannot be isolated from the other accumulators, thus causing an absorption of electrical energy from the power supply otherwise available to the propulsors.

The aim of the invention is to create a method and device for the supplying of electrical energy, especially for electrical feed vehicles, that will permit a relatively simple and economical optimal exploitation of the accumulators, thus efficiently avoiding the inconveniences tied to the primary electrical energy sources of known vehicles. The invention achieves the aforesaid aims with a method for the supplying of electrical energy, especially for electrical feed vehicles of the previously described type with which:

a) the primary source of electrical energy to be subdivided into several electrically independent electrical energy sub-sources, whose voltage is adapted to a predetermined value, by means of a suitable booster.

b) the electric motor to be connected either to one or more of the electrical energy sub-sources or temporarily to all the sub-sources, in order to obtain the necessary supply currents for the electrical propulsors.

The necessary supply currents and the number of sub-sources that must be simultaneously connected to the propulsors, are determined in real time on the basis of the power required by the running conditions. The sub-sources are connected to the propulsor for a predetermined period of time and when the time period elapses, the connected sub-sources are globally or partially substituted with other sub-sources from those that have remained temporarily inactive. To this end, the method, according to the invention discloses that:

a) The continuous measurement of the charge level of the electrical energy sub-sources; b) select the type and number of the electrical energy sub-sources that must be simultaneously connected to provide the required power, on the basis of the running conditions and the charge level of the electrical energy sub-sources, in order to obtain a uniform charge level of the sub-sources among themselves.

In the same time, any type of control can be operated on each of the feed sub-sources for the purpose of obtaining the best performance, in terms of charge efficiency, dissipation and duration.

Advantgeously, the output voltage of each electrical energy sub- source, is transformed into a voltage such as to ensure the correct functioning of the electrical propulsor in all working conditions, given that it is preferable for the transformed output voltages of the electrical energy sub-sources to be of the same size. Insufficiently charged or damaged electrical energy sub-sources are deactivated (stand-by mode) and are signalled to the user.

The device for carrying out the above method, presents the following advantages:

a) a number of electrical energy sub-sources that are electrically independent from each other, given that each of them consists of one or more accumulators, which are connected to each other in series and/or in parallel, and the voltage of each sub-source is adapted on a common supply line, by means of boosters;

b) a common power line to the propulsor, which is connected to each sub-source by means of electrically or electronically operated switches;

c) an electronic control device suitable for the continuous measuring of the charge level and the operating conditions of each sub-source, controlling the relevant switches and continuously determining the propulsor's required supply power, on the basis of the running conditions. According to the above mentioned description, the method and device according to the invention allow to obtain a homogeneous exploiting and a high efficiency of the primary electrical energy source. The constant monitoring of the sub-sources allows for the immediate detection and isolation of damaged sub-sources, and of those having a low charge level that affects overall efficiency, even with a limited energy absorption. The alternate utilization of each sub-source only for a brief period of time avoiding overheating the sub-sources, protecting them against the resulting damage, allows them to function in constant optimum conditions. This has a positive effect on the duration of the sub-sources minimizing energy losses.

Another embodiment of the invention are features that perfect the aforesaid method and device and that are described in the sub-claims.

The particular characteristics of the invention and the advantages to be gained may be seen in more detail from the description of an "example vehicle", illustrated in the enclosed diagrams as follows:

Fig.1 is a block diagram of an electrical feed vehicle.

Fig.2 is a more detailed block diagram relating to the power supply system, in accordance with the patent.

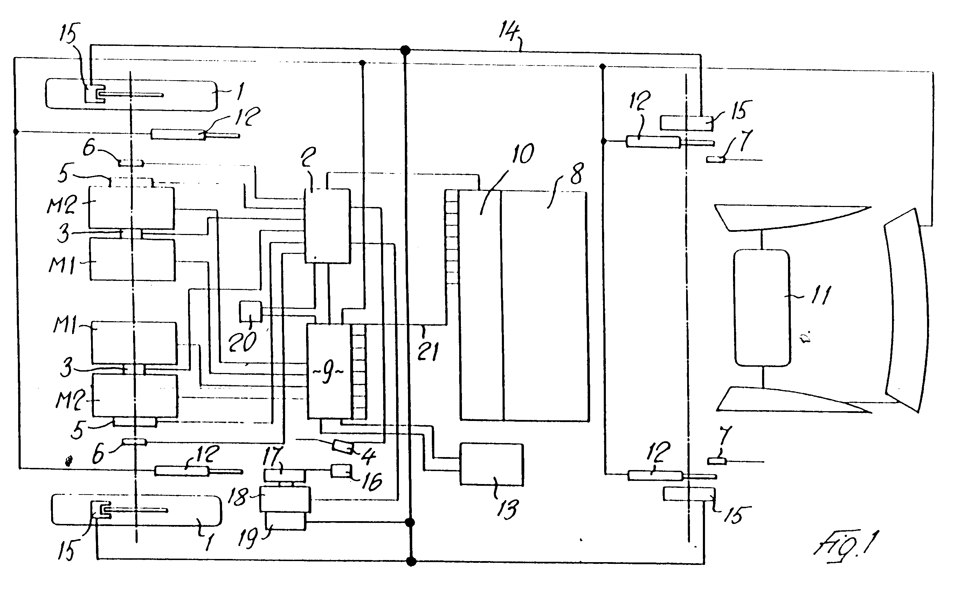

The block diagram in Fig.1, valid as an operative example, illustrates a four-wheels vehicle. The electrical feed vehicle includes a separate propulsion system for each of the two driving wheels 1; a motor power supply circuit 9; an electrical energy recovery unit equipped with several recovery energy generators connected to an electronic flywheel 13; a computer 2, equipped with sensors to measure working parameters and with control actuators for managing vehicle functions.

The propulsion system of each driving wheel 1 is composed of two electric motors M1, M2 connectable by means of a selective coupling to the corresponding wheel's (1) common drive shaft and can be activated separately or both at the same time. Motor M2, known as the "starter motor", develops its maximum torque at a low rpm and is employed to provide both the starting drive thrust and acceleration. Motor M1, known as the "cruising motor", develops its maximum torque at a high rpm and is used during cruising.

Operation of motors M1, M2 is controlled by computer 2 on the basis of measurement signals of the common drive shaft torsion, obtained by torsion sensors (3) and on the basis of the user's requested acceleration, which is indicated to the processor 2 via the accelerator pedal 4. The motors are connected to the corresponding driving wheel 1, through an adjustable and electrically activated coupling 5 on the basis of the transmitted torque. The couplings 5 are directly operated by computer 2, which determines the optimum currents or regulation or drive voltages, on the basis of the motors' transmitted torque to the corresponding driving wheel 1. The transmitted torque is measured by sensors 6.

In addition, computer 2 is also connected to measurement sensors 7 of the steering angle, through which the computer 2 can determine the difference between the angular speeds of the driving wheels 1, controlling motors M1 and M2 of each driving wheel 1 accordingly. This also provides self-locking differential, flexible coupling and brake equalizer functions.

Primary electrical energy source 8 for motors M1 and M2 includes any type of rechargeable battery. The feed energy is supplied by means of a power control unit 9. A voltage-regulation device 10, which is also connected to computer 2, is placed between the primary electrical energy source 8 and the power control unit 9.

The electrical energy recovery devices are connected to the power control unit 9. For example, in the present operative realization, such devices consist of motors M1, M2 themselves, which function as current generators in the braking phase; one or more photovoltaic cells, globally indicated with 11; shock absorbers 12 themselves that are realized as linear generators and convert the dynamic work of the suspension into electrical energy. Recovered electrical energy is stored in electronic flywheel 13, that prevents it from being dissipated and that is also connected to the power control unit 9.

The power control unit 9 controls motors M1, M2' connection to the primary electrical energy source 8 and to each other, and that of the recovered electrical energy generation devices to the electronic flywheel 13. Control unit 9 regulates the supply current of motors M1 and M2 on the basis of user controls via accelerator pedal 4, which is connected to computer 2 and such control unit 9 is also connected to the control output of computer 2.

The brake circuit, indicated with 14, is of a hydraulic type. The braking devices 15 connected to each wheel are controlled by the brake pedal 16, by means of a hydraulic pump 17 connected to a pressurized liquid reservoir 18. An on-off solenoid valve 19 is placed between the pressurized liquid reservoir 18 and circuit 14. Reservoir 18 is equipped with a pressure sensor (not described in detail), which is also connected to computer 2, in order to signal requested brakings.

Besides its basic functions, computer 2 can monitor all vehicle functions, including auxiliary ones, such as heating, etc. Fig.1 shows, by way of example, a heating pump 20 connected to both power control unit 9 and computer 2.

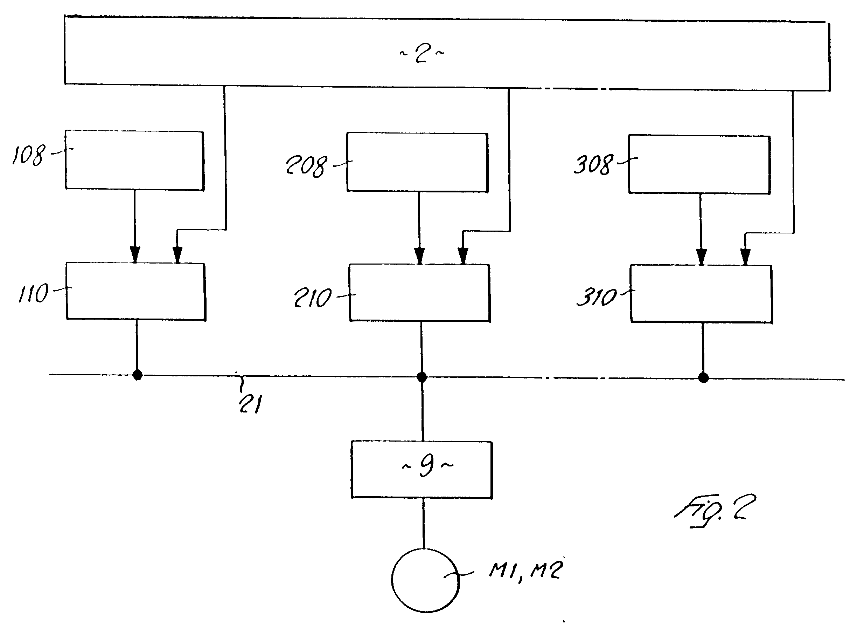

Fig.2 illustrates, in greater detail, the electrical energy supply device, which is the subject of this invention.

The primary electrical energy source 8 is subdivided into several sub-sources, respectively indicated by the numbers 108, 208, 308 and of which, for the sake of brevity, Fig.2 only illustrates three. Each electrical energy sub-source 108, 208, 308 can be made up of only one accumulator or several accumulators connected to each other in series and/or in parallel. The sub-sources 108, 208, 308 can be constructed so as to globally furnish the same voltage rating.

A voltage regulator is placed at the output of each sub-source 108, 208, 308. This can consist of a particular type of DC voltage transformer, known as a booster and indicated with the numbers 110, 210, 310. These voltage regulators 110, 210, 310 are included in a single unit, indicated with 10 in Fig.1. The boosters 110, 210, 310 are independent from each other, as are the corresponding sub-sources 108, 208, 308. They are meant to transform the rated voltage of each sub-source into an output voltage, which may be identical for all the sub-sources 108, 208, 308 and is sufficient to ensure the correct functioning of propulsors M1 and M2 under any running conditions. Preferably, such an output voltage will be greater than the voltage rating of motors M1, M2. The 110, 210, 310 boosters are electronically operated and are each connected separately to computer 2. This connection is a transmission line for data relating to the charge level of the sub-sources 108, 208, 308 to computer 2 in order to monitor their operative conditions and a control line. The control line of boosters 110, 210, 310 allows computer 2 to independently control each booster 110, 210, 310, thus functioning as a connection switch for sub-source 108, 208, 308, in order to supply propulsors M1 and M2.

The supply output of each booster 110, 210, 310 is connected to a common power supply line 21 that supplies energy to propulsors M1, M2. The common power supply line 21 is connected to propulsors M1, M2 by means of power control unit 9 a chopper control unit for each motor, which carries out partialization functions in response to user requirements transmitted via accelerator pedal 4. These devices are also known as choppers.

According to the invention, computer 2 controls the power supply to propulsors M1 and M2; for example, with the help of a suitable program and as described below: computer 2 continuously determines the charge and running condition of sub-sources 108, 208, 308. On the basis of collected data, processor 2 identifies the sub-sources with a charge level below the minimal level and any defective sub-sources and isolates them by setting the corresponding boosters 110, 210, 310 in stand-by condition with respect to their power supply function.

Processor 2 continuously determines the power required by propulsors M1, M2, on the basis of the user controls (accelerator pedal 4) and the running conditions of the vehicle (sensors 3 and 6). On the basis of the required power and the charge level data for each sub-source 108, 208, 308, computer 2 controls the corresponding booster 110, 210, 310 and provides the requested energy to the common power supply line (21), by tapping a given number of sub-sources 108,208,308; it also simultaneously activates the chopper devices included in the power control unit 9.

The selection of the sub-sources (108,208,308) that are to be connected to the common power supply line 21 of the motors M1, M2, is executed on the basis of optimum utilization criteria, and allowing the single sub-sources 108,208,308 to have a homogeneous charge level, as properly programmed on the computer 2.

According to a further feature of the control method, the sub- sources 108,208,308 are connected to a common power supply line 21 for a predetermined period of time and when the time elapses, they are substituted with other sub-sources 108,208,308, which can also be of a different number, and whose total charge level is such as to guarantee the required power supply.

The predetermined activation time of the sub-sources can be preset for each of them and is calculated so as to avoid overheating, which would damage the sub-sources. The activation time can also be calculated by computer 2 for each sub-source 108, 208, 308 on the basis of the charge level or of other parameters. In this way the sub-sources 108, 208, 308 are alternately connected to power supply line 21, in perfect accordance with the accumulators' characteristics and their relative charge level.

According to the invention, within the power supply device, the electronic processor 2 automatically attributes a certain quantity of electrical energy, globally contained in the sub-sources, to a virtual reserve of electrical energy. This is possible by constant monitoring by computer 2 of the charge condition of sub-sources 108, 208, 308. This type of energy reserve has the remarkable advantage of using all the accumulators and all the sub-sources, thus maintaining a uniform charge level. This avoids the prolonged use of reserve electrical energy sources functioning as separate units and thus avoids the inconveniences which they entail.

Naturally, the invention is not limited to the executive forms described and shown above but can be widely varied and modified without abandoning the basic principle above-mentioned and claimed below.

## Claims

1. Method for the supplying electrical energy, especially for electrical feed vehicles that includes a primary source (8), for example a number of accumulators, electrically connected to at least one electrical propulsor (M1, M2) characterized by the fact that:

a) the primary electrical energy source (8) is subdivided into a number of electrical energy sub-sources (108,208,308), electrically independent from each other and equipped with adaptors capable of transforming the voltage value of each sub-source into the right voltage for the propulsors; b) one or more of the electrical energy sub-sources (108, 208, 308) are connected to the electrical propulsor (M1, M2), or temporarily all of them, in order to obtain the necessary electric motor (M1, M2) power supply currents.

2. Method, according to claim 1, characterized by the fact that the necessary power supply currents and the number of sub-sources (108, 208, 308) simultaneously connected to the electrical propulsor (M1, M2) are determined on the basis of the power supply required by running conditions.

3. Method, according to claim 1 or 2, characterized by the fact that the electrical energy sub-sources (108, 208, 308) are connected to the motor for a predetermined limited time period, and as the time elapses, they are completely or partially substituted with other sub-sources chosen from those that are temporarily inactive.

4. Method, according to one or more of the preceding claims, characterized by the fact that monitoring the connection of the sub-sources (108, 208, 308) to the propulsor (M1, M2), entails:

a) constantly measuring the charge level of the sub-sources (108, 208, 308);
b) selecting the sub-sources (108, 208, 308) and their number, which are to be simultaneously connected to provide the requested power, on the basis of their charge level, so as to maintain a uniform charge level of the sub-sources (108, 208, 308) to each other.

5. Method, according to one or more of the preceding claims, characterized by the fact that the voltage of each electrical energy sub-source (108, 208, 308) is transformed into an output voltage, large enough to ensure the correct operation of the electrical propulsor (M1, M2) in all running conditions.

6. Method, according to one or more of the preceding claims, characterized by the fact that insufficiently charged or damaged electrical energy sub-sources (108, 208, 308) are isolated and/or set in a non-starting mode (stand by) and are signalled to the user.

7. Method, according to one or more of the preceding claims, characterized by the fact that:

a) each sub-source (108, 208, 308) can have a different voltage value with respect to the other sub-sources (108, 208, 308);
b) the voltage of each sub-source (108, 208, 308) is individually transformed, so as to obtain an output voltage value which is the same for all the sub-sources (108, 208, 308) and is preferably of a greater value with respect to the motor power supply voltage rating (M1, M2).

8. Method, according to one or more of the preceding claims, characterized by the fact that to feed the propulsor (M1,M2), all the electrical energy sub-sources neither damaged nor below minimum charge level are used and a certain quantity of energy is stored in the electrical energy sub-sources (108,208,308) as reserve electrical energy, and the user is informed of its use.

9. Device for the implementation of the power supply method, especially for electric vehicles that include a primary source (8), made up of several rechargeable accumulators electrically connected to each other and to at least one electrical propulsor (M1,M2), according to the preceding claims, from 1 to 6, it will include the following features:

a) a number of electrically independent electrical energy sub- sources (108,208, 308), each consisting of one or more accumulators connected to each other in series and/or in parallel;
b) a common propulsor (M1,M2) connection line (21), to which (21) each electrical energy sub-source (108,208,308) is attached via its respective boosters (110,210,310), and they are controlled independently, either electrically or electronically;
c) an electronic control device (2), for the continuous measuring of the charge level and of the operative conditions of each electrical energy sub-source (108,208,308), for the controlling of the corresponding boosters (110,210,310) and for the continuous determining of the required propulsor power supply, on the basis of the running conditions.

10. Device, according to claim 9, characterized by the fact that a voltage adaptor (110,210,310) is placed between each electrical energy sub-source (108,208,308) and the propulsors' (M1,M2) common power supply line (21); it is preferably controlled by the computer (2), and has the purpose of transforming the output voltage of its corresponding electrical energy sub-source (108,208,308), to a predetermined value which is identical for all the other adaptors, but is independent of the other electrical energy sub-sources (108,208,308).

11. Device, according to one or more of the preceding claims, characterized by the fact that the voltage adaptors consist of so-called "boosters" (110,210,310), which are driven by an input signal and act as an electronically controlled switch, and at least one input voltage sensor for the corresponding electrical energy sub-source (108,208,308), but each unit is independently connected to the computer (2), to which it transmits sensor data and from which it receives control signals.

12. Device, according to one or more of the preceding claims, characterized by the fact that the computer (2), is connected to a reserve electrical energy signalling device, which is activated when the pre-established minimal level for the electrical energy sub-sources' (108,208,308) total charge is reached.

13. Device, according to one or more of the preceding claims, characterized by the fact that the computer (2) is equipped with timers for the connection of each electrical energy sub-source (108,208,308), for a pre-established maximum time period, which can be permanently and separately preset for each electrical energy sub-source (108,208,308); for example by the processor itself on the basis of the respective charge level.

14. Device, according to one or more of the preceding claims, characterized by the fact that computer (2) can be connected to sensors, one for each separately controlled motor, that measure the vehicle's running conditions and the power supply required for the propulsor (M1,M2); in particular, a power control unit (9) equipped with a chopper circuit located between the common power supply line (21) and the propulsor (M1,M2); a user power request indicator (4) (an accelerator pedal) and measurement sensors (3,6,18) of the vehicle's running conditions.

15. Device, according to one or more of the preceding claims, characterized by the fact that the computer (2) is equipped with a suitable control program and with means suitable for the executing of measurement functions on the charge level of the single electrical energy sub-sources (108,208,308), for the monitoring of the running condition on the basis of signals from the sensors (3,6,18,4), for the monitoring of the power control unit (9) and the single boosters (110,210,310), in order to activate or deactivate certain electrical energy sub-sources (108,208,308), given that the processor contains criteria for optimum utilization of available electrical energy.

16. Method and device for supplying electrical energy, especially for electric vehicles, available completely or partially as described and shown above, and for the aims cited above.

Fig. 1

Fig. 2

# EUROPEAN SEARCH REPORT

Application Number

EP 91 12 0366

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 302 477 (TENNANT CO.)<br>* The whole document * | 1 | B 60 L 11/18 |
| A | | 2,3,9 | |
| A | DE-A-3 410 293 (ELEKTRON)<br>* Abstract; figure 1 * | 1,9 | |
| A | US-A-4 563 621 (A.M. MOORE)<br>* Abstract; figure 1 * | 1,9 | |
| A | US-A-4 066 936 (T. HIROTA)<br>* Abstract; figure 1 * | 1,9 | |

|  |  |
|---|---|
|  | TECHNICAL FIELDS SEARCHED (Int. Cl.5) |
|  | B 60 L |

The present search report has been drawn up for all claims

| Place of search | Date of completion of the search | Examiner |
|---|---|---|
| THE HAGUE | 03-02-1992 | BEYER F. |